# EUROPEAN PATENT SPECIFICATION

(11) **EP 3 702 343 B1**
(45) Date of publication and mention of the grant of the patent: **22.12.2021**
(21) Application number: 20159705.1
(22) Date of filing: 27.02.2020
(51) Int. Cl.: C04B 41/64, C04B 41/71

(54) **PROCESS FOR THE HYDROPHOBIZATION OF A FIBER CEMENT SLAB AND FIBER CEMENT SLAB HAVING A HYDROPHOBIC COATING OBTAINED BY THIS PROCESS**
VERFAHREN ZUR HYDROPHOBIERUNG EINER FASERZEMENTPLATTE UND DURCH DIESES VERFAHREN ERHALTENE FASERZEMENTPLATTE MIT HYDROPHOBER BESCHICHTUNG
PROCÉDÉ D'HYDROPHOBISATION D'UNE DALLE DE FIBRE DE CIMENT ET DALLE DE FIBRE DE CIMENT AYANT UN REVÊTEMENT HYDROPHOBE OBTENU PAR CE PROCÉDÉ

(30) Priority: 01.03.2019 IT 201900003027
(43) Date of publication of application: 02.09.2020
(73) Proprietor: Societa'Italiana Lastre S.p.A., 25028 Verolanuova (Brescia) (IT)
(72) Inventor: TEPPA, Franco, 25028 Verolanuova (BS) (IT); FRANCESCHETTI, Roberto, 25028 Verolanuova (BS) (IT)
(74) Representative: Zambardino, Umberto

(56) References cited:
- EP-A1- 3 067 218
- EP-A1- 3 150 568
- DE-A1- 10 044 641
- DE-B- 1 080 010
- US-A1- 2013 065 061

## Description

### Field of application

In its most general aspect, the present invention relates to the field of fiber cement slab production.

In particular, the present invention relates to a fiber cement slab hydrophobization process as well as to a fiber-cement slab having hydrophobic coating on at least one of its surfaces obtained by this process.

### Prior Art

As is known, fiber cement slabs are widely used products as building materials, particularly for internal and external building facades coating.

It is also known that products of this type are susceptible to water penetration into the fibrous and cementitious matrix under certain weather conditions, for example in case of rain or in wet conditions.

Therefore, fiber cement products usually need protection against penetration of water since water can adversely affect different properties of these products, such as mechanical strength, resistance to weather conditions such as frost, aging and the external appearance of the product.

For example, in the case of mass-coloured fiber cement slabs, the penetration of water into the fibrous and cementitious structure of the product can lead to washout of the introduced pigments leading to a progressive bleaching of the slab with loss of the originally imposed colour. This drawback is particularly relevant in the case of blackcoloured fiber cement slabs since the organic pigment used for this colouring (carbon black) is usually very fine and can be fairly easily washed out by the water penetrating the slab structure.

Furthermore, depending on the fiber and cement composition used and/or the production process, the fiber cement slabs may be undergo the phenomenon known as "efflorescence" in which the water penetrated in the slab can dissolve salts present therein and carry them on the surface causing the formation of white traces visible on the slab surface.

To prevent the negative effects mentioned above, it is known to apply an hydrophobic material coating on the visible slab surface, usually consisting of some fluorinated siloxanes, so as to prevent water penetrating inside the slab.

However, it has been found that the hydrophobic coating obtained with common hydrophobic agents deteriorates or is wasted in rather short times so that the protective effect against the water penetration achieved by the common hydrophobic agents forming the hydrophobic coating applied on the slab surface is frequently rather small and limited in time (usually a few months). In particular, in the case of mass-coloured slabs there is a progressive loss of the pigments used for colouring, in particular black pigments such as carbon black, in rather short times leading to rapid bleaching of the slab.

US 2013/05061 describes a method for producing a construction panel comprising the steps of implementing a base coating onto an inorganic material panel surface; performing an inkjet coating by coating the panel surface with inorganic material having the base coating with a UV curable ink and polymerizing this ink by UV irradiation; and making a transparent coating applying a transparent coating material containing from 0.1 to 10.0% by weight, on a solid basis, of a light stabilizer and/or an ultraviolet absorbent, on the inkjet coated inorganic material panel surface.

EP 3067218 describes fiber cement products suitable for undergo ink-jet printing, whose fiber cement products comprising on their external surface at least one or more cured layers of a first coating composition, which comprises at least one binder and one pigment and characterized by a pigment concentration greater than about 40% by volume.

EP 3150568 describes a method for producing a construction material comprising a first step of applying a primer paint on an inorganic base material surface, curing the primer paint and polishing the primer paint; and a second step of applying an enamel paint onto the primer and curing the enamel paint.

DE 1080010 describes a process for hydrophobization of cement and asbestos products using an emulsion containing a combination of silicones and polymeric resin solutions of acrylic or methacrylic acid esters and triethylammonium oleate.

DE 10044641 describes a method of hydrophobization of fiber cement slabs using an aqueous impregnating liquid containing a polyacrylate resin in a ratio from 5% to 20%.

Therefore the main object of the present invention is to provide an hydrophobization process for fiber cement slabs allowing to form an hydrophobic coating onto the fiber cement slab which is effective as well as durable so as to increase the useful working life of the slab after implementation and to overcome previously mentioned drawbacks with reference to the prior art.

A further object of the present invention is to provide an hydrophobization process for fiber cement slabs also allowing, in addition to forming an effective and long lasting hydrophobic coating on the fiber cement slab, the formation of one or more suitable finishing layers according to contingent needs.

A further object of the present invention is to provide a process as above which can be carried out on industrial scale with relatively reduced costs.

### Summary of the Invention

These aims are primarily achieved by an hydrophobization process of a fiber cement slab comprising the steps of:
- providing a fiber cement slab;
- applying an acrylic-siloxane resin-based composition onto said fiber cement slab;
- drying said acrylic-siloxane resin-based composition, so as to form an hydrophobic coating on said fiber cement slab,
- applying a first (meth)acrylic polyurethane resin-based composition on said hydrophobic coating of the fiber cement slab,
- drying said first transparent composition obtaining a first finishing layer onto said hydrophobic coating layer of the fiber cement slab.

In one embodiment, the first (meth)acrylic polyurethane resin-based composition applied onto said hydrophobic coating layer of the fiber cement slab is transparent, obtaining, after drying of said first composition, a first layer of transparent finishing on said hydrophobic coating layer of the fiber cement slab.

In this embodiment, the process according to the invention can further comprise the steps of:
- applying a second transparent (meth)acrylic polyurethane resin-based composition onto said first transparent finishing layer, said second (meth)acrylic polyurethane resin-based composition having, after drying, hardness properties higher than those of said first (meth)acrylic polyurethane resin-based composition;
- drying said second transparent composition thereby obtaining a second transparent finishing layer on said first transparent finishing layer and harder than the latter.

In an alternative embodiment, the first (meth)acrylic polyurethane resin-based composition applied onto said hydrophobic coating layer of the fiber cement slab contains a white pigment obtaining, after drying of said first composition, a first white finishing layer (or primer) onto said hydrophobic coating layer of the fiber cement slab. In this alternative embodiment, the method according to the invention further comprises:
- applying a second (meth)acrylic polyurethane resin-based composition containing at least a coloured pigment onto said first white finishing layer, said second (meth)acrylic polyurethane resin-based composition having, after drying, hardness properties higher than those of said first (meth)acrylic polyurethane resin-based composition;
- drying said second composition thereby obtaining a second coloured finishing layer on said first white finishing layer of the fiber cement slab. The aforementioned objects are also achieved with a fiber cement slab obtainable by a process as described above.

This slab is characterized in that it has an acrylic-siloxane resin-based hydrophobic coating and wherein said acrylic-siloxane resin is preferably also in the pores of the fiber and cement slab matrix, and in that it further comprises a first (meth)acrylic polyurethane resin-based finishing layer on said hydrophobic coating.

In one embodiment, the fiber cement slab according to the invention can be mass-coloured and is characterized in that it has a first (meth)acrylic polyurethane resin-based transparent finishing layer onto said hydrophobic coating and, optionally, a second (meth)acrylic polyurethane resin-based transparent finishing layer onto said first finishing layer such as to give greater hardness with respect to the first transparent finishing layer to said second transparent finishing layer.

In an alternative embodiment, the fiber cement slab according to the invention is characterized in that it has a first white (meth)acrylic polyurethane resin-based finishing layer containing a white pigment onto said hydrophobic coating, and a second (meth)acrylic polyurethane resin-based coloured finishing layer containing at least one coloured pigment onto said first white finishing layer, said second coloured finishing layer preferably having greater hardness with respect to the first white finishing layer.

Further features and advantages of the present invention will become apparent from the following detailed description and example which are provided by way of non-limiting example.

### Detailed Description

In the present description, the indication of numerical ranges includes all values and fractions included in the respective ranges as well as the end values.

The terms "predetermined" or "predefined" as used in the present description when referring to one or more parameters or properties generally indicate that these parameters or properties desired value(s) have been defined or determined in advance, i.e. prior to beginning of the process for printed plates production which are characterized by one or more of these parameters or properties.

The term "fiber cement slab" as used in the present description refers to a flat, usually rectangular, element in the form of a slab, panel or plate made of a material comprising synthetic and/or natural fibers and cement. The fiber cement slab has two main opposing surfaces or faces with a larger area and can be used for coating internal and external building facades or constructions.

In the context of the present invention, the term "hydrophobization" or similar terms indicates the application of agents having properties of water repellency and/or water proofing on hydrophilic materials and/or surfaces such as fiber cement slabs in order to impart them water repellency and/or water proofing properties and, more generally, to increase hydrophobic properties of these materials.

The fiber cement slab can be obtained with conventional processes involving the making of a mixture comprising water, fibers and cement followed by a curing process. The fibers can be natural organic fibers (typically cellulose fibers) or synthetic organic fibers such as, but not limited to, polyvinyl alcohol, polyacrylonitrile, polypropylene, polyamide, polyester, polycarbonate, polyethylene, etc.. The cement or cement material can be, including but not limited to, Portland cement, cement with a high alumina content, Portland iron cement, trass cement, slag cement, gypsum, calcium silicates, etc. The mixture may contain further additives such as anti-foam agents, flocculating agents or other additives, for example pigments to obtain a so-called mass-coloured product.

The mixture comprising fibers and cement is pressed and cured in a conventional way for example by air curing or by thermal curing, for example by autoclaving under pressure at relatively high temperatures and in the presence of water vapor.

At the end of curing, a fiber-cement product is obtained which has a significant moisture content, usually ranging from 10% to 15% by weight based on dry product weight, wherein by weight based on dry product weight indicates the weight of the product undergoing drying at 105°C in a fan oven until constant weight. The fiber cement product is cut to a predetermined length to form predetermined size fiber cement slabs.

In the present description, the term "pigment" refers to an insoluble dry substance, usually pulverized, which becomes an ink, paint, etc, when suspended in a liquid vehicle. Typically, pigments consist of thin solid particles which improve the appearance by providing colour and/or the ink or varnish properties comprising them. In the present invention both inorganic pigments, i.e. mineral colouring compounds usually consisting of oxides and/or metal salts, and organic pigments such as for example black smoke (carbon black) are contemplated. The pigments can be pigments capable of light scattering and providing whiteness (white) and/or pigments capable of selectively light absorption and providing colouring to the ink or varnish. By way of non-limiting example, white pigments include antimony pigments, such as antimony oxide, lead pigments such as carbonate and lead oxide, titanium pigments such as titanium oxide and zinc pigments such as zinc oxide. By way of non-limiting example, coloured pigments can be selected from cobalt, copper, chromium, iron, lead, cadmium, manganese, aluminum, carbon (e.g. carbon black) oxides, hydroxides and salts, etc. according to the chosen colour.

In the process according to the invention, the fiber cement slab is subjected to an hydrophobization treatment with an an acrylic-siloxane resin-based composition which is applied at least on one of its surfaces, preferably on the entire slab, so as to obtain an hydrophobic coating.

The acrylic-siloxane resin-based composition is preferably a liquid, semi-solid (e.g. paste) or fluid composition comprising an acrylic-siloxane resin and a solvent.

The acrylic-siloxane resin can consist of any resin having an acrylic resin component and a siloxane resin component, possibly chemically joined together, and having high water repellency and/or water proofing properties. In particular, the acrylic-siloxane resin has a siloxane resin component content of less than 40% by weight.

The solvent may consist of water, a suitable organic solvent or a mixture thereof. For example, the solvent may comprise water as main solvent and one or more suitable organic co-solvents. Suitable organic solvents include, without limitation, ester solvents, e.g. ethyl acetate, butyl acetate and the like, ketone solvents, e.g. acetone, methylisobutylketone, methylethylketone and the like, alcohols, e.g. butyl alcohol and the like and aromatic solvents, e.g. toluene, xylene and the like.

Preferably, the solvent is water or comprises water together with an organic co-solvent selected from the above mentioned solvents.

The amount of solvent in the composition can be chosen by the person skilled in the art according to specific needs, such as for example the application method of this composition.

In a preferred embodiment, the acrylic-siloxane resin-based composition comprises an acrylic-siloxane resin and water as a solvent in a weight ratio preferably comprised between 1:2 and 2:1, in particular 1:1.

The acrylic-siloxane resin-based composition can further comprise auxiliary components per se conventional such as surfactants, lubricants, stabilizers, viscosity regulators, etc.

The application of the acrylic-siloxane resin-based composition on at least one surface of the fiber cement slab can be carried out by methods known in the art such as, for example, spraying, knife application, roller application, curtain coating, brushing, immersion, showering and combinations thereof.

Preferably, the application of the acrylic-siloxane resin-based composition is carried out by fiber cement slab showering or wetting with an acrylic-siloxane resin-based composition falling out from appropriate shower nozzles.

The acrylic-siloxane resin-based composition is applied on the fiber cement slab in an amount which is preferably ranging from 80 g/m² and 100 g/m².

After the application of the acrylic-siloxane resin-based composition, the resin is allowed to penetrate inside the fibers and cement porous matrix constituting the slab in a substantially homogeneous manner for a predetermined time, preferably in the range of 30-90 seconds.

Subsequently, the acrylic-siloxane resin-based composition applied onto the fiber cement slab is dried so as to polymerize the resin and form an hydrophobic coating on at least one surface of said fiber cement slab.

Drying can be conveniently carried out in an oven, at a temperature preferably between 40°C and 60°C and for a time preferably ranging between 30 seconds and 90 seconds.

It has been surprisingly found that the application of an acrylic-siloxane resin on the fiber cement slab allows obtaining an effective and long lasting hydrophobic coating. In particular, it has been found that the acrylic-siloxane resin applied onto the fiber cement slab can penetrate the slab structure or porous matrix substantially in a homogeneous way, consolidating it and making the slab more compact, due to acrylic resin component binding properties giving adequate adhesion mechanical properties. At the same time, the silicone resin component gives adequate water repellency and/or water proofing properties thereby increasing the slab hydrophobic properties.

The overall result is that the hydrophobic coating applied to the slab proves to be effective in protecting the slab from water penetration and at the same time to be firmly anchored to the slab itself and therefore more durable thus allowing to significantly increase the useful life of the slab without substantial loss of its original properties, in particular mechanical properties and original colouring.

The process according to the invention further comprises coating steps of the fiber cement slab made hydrophobic in order to give the slab at least one transparent or coloured finishing layer.

In one embodiment, the process of the invention further comprises process steps of forming at least one transparent finishing layer onto the fiber cement sheet previously made hydrophobic as indicated above. This transparent finishing is particularly suitable for fiber cement slabs which are mass-coloured.

In this case, the process according to the invention comprises the application of a first transparent (meth)acrylic polyurethane resin-based composition onto said hydrophobic coating of the fiber cement slab, followed by drying of the above first transparent composition so as to obtain a first layer of transparent finishing onto said hydrophobic coating layer of the fiber cement slab.

The (meth)acrylic polyurethane resin can be any polyurethane resin modified with acrylic or methacrylic groups produced for example by reacting a urethane prepolymer, which is a reaction product between a polyol and an isocyanate with one or more acrylates or methacrylates. Preferably, the polyurethane resin modified with (meth)acrylic groups may comprise from 60% to 80%, for example 70%, of urethane prepolymer and from 20% to 40% by weight, for example 30% of (meth)acrylates, where the percentages are by weight on the total weight of the polyurethane resin modified with (meth)acrylate groups.

The urethane prepolymer can be produced using a polyol and an isocyanate.

Suitable polyols include polyester polyols, polycarbonate polyols, polyether polyols and combinations thereof

Suitable isocyanates include aliphatic or cycloaliphatic isocyanates, preferably diisocyanates. By way of example and without limitation, aliphatic diisocyanates can be selected from hexamethylene 1,6 diisocyanate, 2-methylpentamethylene 1,5-diisocyanate and their mixtures while cycloaliphatic diisocyanates can be selected from isophorone diisocyanate and cyclohexane 1,4 diisocyanate and combinations thereof.

Preferably, isocyanates are used in the form of isocyanate pre-polymers (or otherwise called oligomers), isocyanurates, allophanates or biurets.

Suitable acrylates and methacrylates include but are not limited to methyl methacrylate, butyl methacrylate, ethyl acrylate, n-butyl acrylate, aryl acrylate, 1-6 hexanediol methacrylate and combinations thereof.

The first (meth)acrylic polyurethane resin-based composition may comprise further functional and/or auxiliary components which are conventional as such, such as for example liquid vehicles, catalysts, crosslinkers, surfactants, lubricants, stabilizers, viscosity regulators, etc.

In particular, the (meth)acrylic polyurethane resin-based composition can be a liquid, semi-solid (e.g. paste) or fluid composition comprising (meth)acrylic polyurethane resin and a liquid vehicle (solvent).

The liquid vehicle is preferably water-based and is preferably water or alternatively a mixture comprising water and an organic co-solvent selected for example from the organic solvents indicated above.

The amount of liquid vehicle in said first composition can be chosen by the person skilled in the art according to specific needs, such as for example the application method of this first composition.

The first (meth)acrylic polyurethane resin-based composition may have a solid content of 30% to 60% by weight on the total weight of the composition and the (meth)acrylic polyurethane resin may have for example a number-average molecular weight ranging from 8,000 to 100,000 Daltons.

The application of the first (meth)acrylic resin-based composition onto the fiber cement slab hydrophobic coating can be carried out by methods known in the art such as, for example, spraying, knife application, roller application, curtain coating, brushing, immersion and combinations thereof.

Preferably, the application of the first (meth)acrylic resin-based composition is carried out by spraying.

The first (meth)acrylic resin-based composition is applied to the hydrophobic coating of the fiber cement slab in an amount preferably ranging from 40 g/m² to 100 g/m², preferably from 50 g/m² to 70 g/m².

Subsequently, the (meth)acrylic resin-based composition applied onto the hydrophobic coating of the fiber cement slab is dried so as to polymerize the resin and form a first layer of transparent finishing on the hydrophobic coating of the fiber cement slab.

Drying can be conveniently carried out in an oven, at a temperature preferably between 40°C and 60°C and for a time preferably ranging between 30 seconds and 90 seconds.

The first layer of transparent finishing thus obtained can be subjected to light brushing (or sanding), for example with a brush equipped with abrasive paper, so as to eliminate any surface irregularities consisting of, for example, a slight fluff (or fluff) of fibers raised following the previous treatment and obtaining a substantially uniform surface for the first transparent finishing layer.

Preferably, the overall thickness of the first transparent finishing layer is between 0.01 and 0.5 mm.

The process according to the invention may comprise making a second harder transparent finishing layer onto the first transparent finishing layer obtained as above.

In this case, a second transparent (meth)acrylic polyurethane resin-based composition is applied onto said first layer of transparent finishing, wherein said second composition has components and/or additives such that, following polymerization of said second transparent composition in the subsequent drying step, a second layer of transparent finishing of greater hardness is obtained onto said first layer of transparent finishing.

The (meth)acrylic polyurethane resin of the second transparent finishing composition can be the same type as the one indicated above for the first transparent finishing composition and can further contain curing agents and anti-adhesion agents to reduce surface adhesion and therefore avoid removal and/or damage of the second layer of transparent finishing in subsequent processing and/or during the use of the final product. Furthermore, the second transparent finishing composition may contain a solvent and further components as indicated above for the first transparent finishing composition.

The application of the second (meth)acrylic resin-based composition on the finishing layer of fiber cement slab can be carried out by methods known in the art such as, for example, spraying, knife application, roller application, curtain coating, brushing, immersion and combinations thereof.

Preferably, the application of the second (meth)acrylic resin-based composition is carried out by spraying.

The second (meth)acrylic resin-based composition is applied to the first finishing layer of the fiber cement slab in an amount preferably ranging from 40 g/m² to 100 g/m², preferably from 50 g/m² to 70 g/m².

Drying involves polymerization of the second composition based on transparent (meth)acrylic polyurethane resin-based composition and can be conveniently carried out in an oven, at a temperature which is preferably between 40°C and 60°C and for a time period preferably ranging from 30 seconds to 90 seconds.

At the end of drying, a second layer of hard and transparent finishing is obtained on the first layer of transparent finishing which has a remarkable adherence on the first finishing layer and reduced adhesiveness on the exposed surface, and adequate mechanical resistance properties, in particular resistance to layers removal, resistance to cut and scratches.

Preferably, the overall thickness of the second transparent and hard finishing layer is between 0.01 and 0.5 mm.

Subsequently, the fiber cement slab made hydrophobic and coated with a transparent coating as described above can be subjected to a final drying step in oven at a temperature of 50-70°C for a time of 30-90 seconds followed by air cooling (for example by a fan) and then by cooling to refrigerated temperature (for example in a refrigerator) to bring the slab temperature below 30°C and thereby avoid the adhesion of the slabs for example during storage and/or stacking.

In this way, a final product ready for use is obtained as external or internal facades of buildings cladding.

Alternatively, the process of the invention comprises process steps of forming, over the hydrophobic coating, a white finishing layer constituting a base (primer) for a second outer coloured finishing layer. In this case, the process according to the invention includes the application of a first (meth)acrylic polyurethane resin-based composition containing a white pigment on the hydrophobic coating of the fiber cement slab followed by drying of this first composition so as to obtain a first white finishing layer (or primer).

The (meth)acrylic polyurethane resin of the first finishing composition can be the same type as the (meth)acrylic polyurethane resins indicated above and moreover the first composition can contain a solvent and further components or additives as indicated above and in particular contains a white pigment chosen for example from the white pigments indicated above.

The application of the first (meth)acrylic resin-based composition containing white pigment on the hydrophobic coating can be carried out by methods known in the art such as, for example, spraying, knife application, roller application, curtain coating, brushing, immersion and combinations thereof.

Preferably, the application of the first (meth)acrylic resin-based composition is carried out by spraying.

The first (meth)acrylic polyurethane resin-based composition containing white pigment is applied to the hydrophobic coating of the fiber cement slab in an amount ranging from 40 g/m² to 100 g/m², preferably from 50 g/m² to 70 g/m².

Drying involves polymerization of the first composition based on (meth)acrylic polyurethane resin and can be conveniently carried out in an oven, at a temperature which is preferably between 40°C and 60°C and for a time period preferably ranging from 30 seconds to 90 seconds.

At the end of drying, a first white finishing layer is obtained. Preferably, the overall thickness of the first white finishing layer is between 0.01 and 0.5 mm.

The white finishing layer constitutes a base layer (or primer) on which a painting can be carried out so as to impart to the slab a desired colouring or a combination of colours.

In this case, the process according to the invention comprises the application of a second (meth) acrylic polyurethane resin-based composition and containing at least one coloured pigment on the first white finishing layer followed by drying of said second composition so as to obtain a second coloured finishing layer on the first white finishing layer of the fiber cement slab.

The (meth)acrylic polyurethane resin of the second finishing composition can be the same type as the (meth)acrylic polyurethane resins indicated above and moreover the second composition can contain a solvent and further components or additives as indicated above and in particular contains at least a coloured pigment chosen for example from the white coloured indicated above.

In particular, the second (meth)acrylic polyurethane resin-based composition can contain curing agents to make the second coloured finishing layer harder than the first white finishing layer and anti-adhesion agents to reduce surface adhesion thus avoiding removal and/or damage of the second coloured finishing layer in subsequent processing and/or during the use of the final product.

The application of the second (meth)acrylic resin-based composition containing a coloured pigment on the first white finishing layer can be carried out by methods known in the art such as, for example, spraying, knife application, roller application, curtain coating, brushing, immersion and combinations thereof.

Preferably, the application of the second (meth)acrylic resin-based composition is carried out by spraying.

The second (meth)acrylic resin-based composition and containing at least a coloured pigment is applied to the first white finishing layer of the fiber cement slab in an amount ranging from 40 g/m² to 100 g/m², preferably from 50 g/m² to 70 g/m².

Drying involves polymerization of the second composition based on (meth)acrylic polyurethane resin and can be conveniently carried out in an oven, at a temperature which is preferably between 40°C and 60°C and for a time period preferably ranging from 30 seconds to 90 seconds.

At the end of drying, a second finishing layer is obtained which gives the slab the desired colouring or colour combination. Preferably, the overall thickness of the second coloured finishing layer is between 0.01 and 0.5 mm.

Subsequently, the fiber cement slab made hydrophobic and coated with a coating as described above can undergo a final drying step in the oven at a temperature of 50-70°C for a time of 30-90 seconds followed by air cooling (for example by a fan) and then by cooling to refrigerated temperature (for example in a refrigerator) to bring the slab temperature below 30° and thereby avoiding the adhesion of the slabs for example during storage and/or stacking.

This results in a final product ready for use is obtained as external or internal facades of buildings cladding.

### EXAMPLE

Fiber cement slabs have been produced in a conventional way and cured in an autoclave. The moisture content of the fiber cement slabs after curing was 10-15%.

The fiber cement slabs were subjected to an hydrophobic treatment by immersion of the slabs in a bath of an acrylic-siloxane resin-based composition obtained by dilution of Fibromix 1370 commercially available product from Franchi&Kim Company with water in a 1:1 ratio by weight between acrylic-siloxane resin and water.

The acrylic-siloxane resin-based composition was applied to each fiber cement slab by showering in an amount ranging from 80 g/m² to 100 g/m².

The acrylic-siloxane resin was then allowed to penetrate inside the fibers and cement porous matrix for a time of between 30 seconds and 90 seconds and then the fiber cement slabs were dried in the oven at a temperature between 40°C and 60°C and for a time of 30-90 seconds, obtaining an hydrophobic coating on each fiber cement slab.

Subsequently, on the hydrophobic coating of one surface of each fiber cement sheet, a first transparent (meth)acrylic polyurethane resin-based composition consisting of the Fibromix 1373 product commercially available from Franchi&Kim Company was applied.

The first (meth)acrylic polyurethane resin-based composition was applied by spraying in an amount from 50 g/m² to 70 g/m².

Subsequently, the fiber cement slabs were dried in the oven at a temperature between 40°C and 60°C and for a time of 30-90 seconds, obtaining a first transparent finishing layer with a thickness between 0.01 and 0.5 mm on the hydrophobic coating of one surface of each fiber cement slab.

The first layer of transparent finishing was lightly brushed and a second transparent (meth) acrylic polyurethane resin-based composition consisting of the Fibromix 1377 product commercially available from Franchi&Kim Company was applied.

The second (meth)acrylic polyurethane resin-based composition was applied by spraying in an amount from 50 g/m² to 70 g/m².

Subsequently, the fiber cement slabs were dried and cured in the oven at a temperature between 40°C and 60°C and for a time of 30-90 seconds, obtaining a second transparent and hard finishing layer with a thickness between 0.01 and 0.5 mm on the first finishing layer of each fiber cement slab.

The slabs were finally subjected to a final drying in the oven at a temperature of 50-70°C for a time of 30-90 seconds followed by a air cooling (for example by means of a fan) and then by cooling to refrigerated temperature (for example in a refrigerator) to bring the temperature of the slabs below 30°C. The hydrophobized and coated slabs as above were subjected to weather resistance tests carried out in accordance with the QUV test (Accelerated weathering test) according to UNE-EN 1062-11:2003 standard. In particular, according to ASTM G154, test slab samples were subjected to accelerated aging cycles by irradiation with UV lamps (UVB-313 lamps) consisting of:
- dry irradiation step lasting 4 hours;
- water spraying step lasting 4 hours.

After 1500 h and 2500-3000 h exposure, colour, gloss and defects present in the test samples were evaluated.

There was no colour change, no loss of gloss in the test samples both after 1000 h exposure and after 2500-3000 h exposure.

Furthermore, no chalking, embrittlement, bubble formation, cracking and peeling defects were found in the test samples both after 1000 h exposure and after 2500-3000 h exposure.

Furthermore, no hazing was found in the test samples both after 1000 h exposure and after 2500-3000 h exposure.

Furthermore, immersion in water tests of hydrophobized and coated slabs as above were carried out for predetermined periods of time. From these tests it was found that the slabs according to the invention obtained as above maintained the original production properties substantially unchanged and in particular no appreciable loss of colour was found. Conversely, similar comparative tests conducted on conventional hydrophobized slabs with siloxane based-hydrophobization agents showed a significant loss of colour (bleaching) after just one week of immersion in water.

In order to satisfy contingent and specific needs, a person skilled in the art will be able to apply, to the process according to the invention, numerous modifications and variations, all of which however fall within the scope of protection of the appended claims.

## Claims

1. Process for the hydrophobization of a fiber cement slab comprising the steps of:
- providing a fiber cement slab;
- applying an acrylic-siloxane resin-based composition onto said fiber cement slab;
- drying said acrylic-siloxane resin-based composition, so as to form an hydrophobic coating on said fiber cement slab;
- applying a first (meth)acrylic polyurethane resin-based composition onto said hydrophobic coating of the fiber cement slab;
- drying said first composition obtaining a first finishing layer on said hydrophobic coating layer of the fiber cement slab.

2. Process according to claim 1, wherein said acrylic-siloxane resin-based composition is applied onto the fiber cement slab, preferably by showering, in an amount ranging from 80 g/m² to 100 g/m².

3. Process according to claim 1 or 2, wherein drying of said acrylic-siloxane resin-based composition is performed in an oven, at a temperature between 40°C and 60°C for a time preferably ranging from 30 seconds to 90 seconds.

4. Process according to any one of the preceding claims, wherein, after the application step and before the drying step, said acrylic-siloxane resin is allowed to penetrate in the porous matrix of said fiber cement slab for a time preferably ranging from 30 seconds to 90 seconds.

5. Process according to any one of the preceding claims, wherein said first (meth)acrylic polyurethane resin-based composition applied on said hydrophobic coating layer of the fiber cement slab is transparent, obtaining, after drying of said first composition, a first transparent finishing layer on said hydrophobic coating layer of the fiber cement slab.

6. Process according to claim 5, further comprising the steps of:
- applying a second transparent (meth)acrylic polyurethane resin-based composition onto said first transparent finishing layer, said second (meth) acrylic polyurethane resin-based composition having, after drying, hardness properties higher than those of said first (meth)acrylic polyurethane resin-based composition;
- drying said second transparent composition thereby obtaining a second transparent finishing layer on said first transparent finishing layer and harder than the latter.

7. Process according to claim 5 or 6, wherein said first composition and/or said second composition based on transparent (meth)acrylic polyurethane resin is applied, preferably by spraying, in an amount ranging from 40 g/m² to 100 g/m², preferably from 50 g/m² to 70 g/m².

8. Process according to claim 5, 6 or 7, wherein drying of said first composition and/or said second composition based on transparent (meth)acrylic polyurethane resin is performed in an oven, at a temperature between 40°C and 60°C for a time period preferably ranging from 30 seconds to 90 seconds.

9. Process according to any one of the preceding claims 1-4, wherein said first (meth)acrylic polyurethane resin-based composition applied onto said hydrophobic coating layer of the fiber cement slab contains a white pigment obtaining, after drying of said first composition, a first white finishing layer (primer) onto said hydrophobic coating layer of the fiber cement slab; the process further comprising the steps of:
- applying a second (meth)acrylic polyurethane resin-based composition containing at least a coloured pigment onto said first white finishing layer, said second (meth)acrylic polyurethane resin-based composition having preferably, after drying, hardness properties higher than those of said first (meth)acrylic polyurethane resin-based composition;
- drying said second composition thereby obtaining a second coloured finishing layer on said first white finishing layer of the fiber cement slab.

10. Process according to claim 9, wherein said first composition and/or said second composition based on (meth)acrylic polyurethane resin is applied, preferably by spraying, in an amount ranging from 40 g/m² to 100 g/m², preferably from 50 g/m² to 70 g/m².

11. Process according to claim 9 or 10, wherein drying of said first composition and/or said second composition based on (meth)acrylic polyurethane resin is performed in an oven, at a temperature between 40°C and 60°C for a time preferably ranging from 30 seconds to 90 seconds.

12. Hydrophobized fiber cement slab, obtainable by the process according to any one of the preceding claims.

13. Hydrophobized fiber cement slab according to claim 12, comprising an acrylic-siloxane resin-based hydrophobic coating and wherein said acrylic-siloxane resin is also in the pores of the matrix of fibers and cement of the slab, and a first (meth)acrylic polyurethane resin-based finishing layer onto said hydrophobic coating layer.

14. Hydrophobized fiber cement slab according to claim 13, comprising a first transparent (meth)acrylic polyurethane resin-based finishing layer onto said hydrophobic coating and, optionally, a second transparent (meth)acrylic polyurethane resin-based finishing layer onto said first finishing layer, said second transparent finishing layer having a higher hardness than that of the first transparent finishing layer.

15. Hydrophobized fiber cement slab according to claim 13 comprising an acrylic-siloxane resin-based hydrophobic coating and wherein said acrylic-siloxane resin is also in the pores of the matrix of fibers and cement of the slab, a first white (meth)acrylic polyurethane resin-based finishing layer containing a white pigment onto said hydrophobic coating, and a second (meth)acrylic polyurethane resin-based coloured finishing layer containing at least one coloured pigment onto said first white finishing layer, said second coloured finishing layer preferably having greater hardness with respect to the first white finishing layer.

## Patentansprüche

1. Verfahren für die Hydrophobierung einer Faserzementplatte umfassend die Schritte:
- Bereitstellen einer Faserzementplatte;
- Aufbringen einer auf Acryl-Siloxan-Harz basierenden Zusammensetzung auf die Faserzementplatte;
- Trocknen der auf Acryl-Siloxan-Harz basierenden Zusammensetzung, um so einen hydrophoben Überzug auf der Faserzementplatte zu bilden;
- Aufbringen einer ersten auf (Meth)acryl-Polyurethan-Harz basierenden Zusammensetzung auf dem hydrophoben Überzug der Faserzementplatte;
- Trocknen der ersten Zusammensetzung, wodurch eine erste Oberflächenschicht auf der hydrophoben Überzugsschicht der Faserzementplatte erhalten wird.

2. Verfahren gemäß Anspruch 1, wobei die auf Acryl-Siloxan-Harz basierende Zusammensetzung auf die Faserzementplatte in einer Menge von 80 g/m² bis 100 g/m² aufgebracht wird, bevorzugt durch Übergießen.

3. Verfahren gemäß Anspruch 1 oder 2, wobei das Trocknen der auf Acryl-Siloxan-Harz basierenden Zusammensetzung in einem Ofen bei einer Temperatur zwischen 40°C und 60°C für eine Zeit bevorzugt in einem Bereich von 30 Sekunden bis 90 Sekunden durchgeführt wird.

4. Verfahren gemäß einem der vorstehenden Ansprüche, wobei es nach dem Schritt des Aufbringens und vor dem Schritt des Trocknens zugelassen wird, dass das Acryl-Siloxan-Harz in die poröse Matrix der Faserzementplatte für eine Zeit bevorzugt in einem Bereich von 30 Sekunden bis 90 Sekunden eindringt.

5. Verfahren gemäß einem der vorstehenden Ansprüche, wobei die erste auf (Meth)acryl-Polyurethan-Harz basierende Zusammensetzung, welche auf die hydrophobe Überzugsschicht der Faserzementplatte aufgebracht wird, transparent ist, wodurch nach dem Trocknen der ersten Zusammensetzung eine erste transparente Oberflächenschicht auf der hydrophoben Überzugsschicht der Faserzementplatte erhalten wird.

6. Verfahren gemäß Anspruch 5, umfassend die weiteren Schritte:
- Aufbringen einer zweiten transparenten auf (Meth)acryl-Polyurethan-Harz basierenden Zusammensetzung auf der ersten transparenten Oberflächenschicht, wobei die zweite auf (Meth)acryl-Polyurethan-Harz basierende Zusammensetzung nach dem Trockenen eine höhere Härte als die erste auf (Meth)acryl-Polyurethan-Harz basierende Zusammensetzung aufweist;
- Trocknen der zweiten transparenten Zusammensetzung wodurch eine zweite transparente Oberflächenschicht auf der ersten transparenten Oberflächenschicht erhalten wird, die härter ist als Letztere.

7. Verfahren gemäß Anspruch 5 oder 6, wobei die erste Zusammensetzung und/oder die zweite Zusammensetzung, die auf transparentem Meth(acryl)-Polyurethan-Harz basiert, in einer Menge von 40 g/m² bis 100 g/m², bevorzugt von 50 g/m² bis 70 g/m², aufgebracht wird, bevorzugt durch Sprühen.

8. Verfahren gemäß Anspruch 5, 6 oder 7, wobei das Trocknen der ersten Zusammensetzung und/oder der zweiten Zusammensetzung, die auf transparentem Meth(acryl)-Polyurethan-Harz basiert, in einem Ofen bei einer Temperatur zwischen 40°C und 60°C für eine Zeit bevorzugt in einem Bereich von 30 Sekunden bis 90 Sekunden durchgeführt wird.

9. Verfahren gemäß einem der vorangegangen Ansprüche 1 bis 4, wobei die erste auf Meth(acryl)-Polyurethan-Harz basierende Zusammensetzung, die auf der hydrophoben Überzugsschicht der Faserzementplatte aufgebracht wird, ein weißes Pigment enthält, wodurch nach dem Trocknen der ersten Zusammensetzung ein erste weiße Oberflächenschicht (Primer) auf der hydrophoben Überzugsschicht der Faserzementplatte erhalten wird, wobei das Verfahren die weiteren Schritte umfasst:
- Aufbringen einer zweiten auf (Meth)acryl-Polyurethan-Harz basierenden Zusammensetzung, die mindestens ein farbiges Pigment enthält, auf der ersten weißen Oberflächenschicht, wobei die zweite auf (Meth)acryl-Polyurethan-Harz basierende Zusammensetzung nach dem Trockenen bevorzugt eine höhere Härte als die erste auf (Meth)acryl-Polyurethan-Harz basierende Zusammensetzung aufweist;
- Trocknen der zweiten Zusammensetzung wodurch eine zweite farbige Oberflächenschicht auf der ersten, weißen Oberflächenschicht der Faserzementplatte erhalten wird.

10. Verfahren gemäß Anspruch 9, wobei die erste Zusammensetzung und/oder zweite Zusammensetzung, die auf Meth(acryl)-Polyurethan-Harz basiert, in einer Menge von 40 g/m² bis 100 g/m², bevorzugt von 50 g/m² bis 70 g/m², aufgebracht wird, bevorzugt durch Sprühen.

11. Verfahren gemäß Anspruch 9 oder 10, wobei das Trocknen der ersten Zusammensetzung und/oder zweiten Zusammensetzung, die auf Meth(acryl)-Polyurethan-Harz basiert, in einem Ofen bei einer Temperatur zwischen 40°C und 60°C für eine Zeit bevorzugt in einem Bereich von 30 Sekunden bis 90 Sekunden durchgeführt wird.

12. Hydrophobierte Faserzementplatte, erhältlich durch das Verfahren gemäß einem der vorangegangenen Ansprüche.

13. Hydrophobierte Faserzementplatte gemäß Anspruch 12, umfassend einen auf Acryl-Siloxan-Harz basierenden Überzug und wobei sich das Acryl-Siloxan-Harz auch in den Poren der Matrix aus Faser und Zement von der Platte befindet, und eine erste auf Meth(acryl)-Polyurethan-Harz basierende Oberflächenschicht auf der hydrophoben Überzugsschicht.

14. Hydrophobierte Faserzementplatte gemäß Anspruch 13, umfassend eine erste transparente auf Meth(acryl)-Polyurethan-Harz basierende Oberflächenschicht auf dem hydrophoben Überzug, und optional eine zweite transparente auf Meth(acryl)-Polyurethan-Harz basierende Oberflächenschicht auf der ersten Oberflächenschicht, wobei die zweite transparente Oberflächenschicht eine höhere Härte als die erste transparente Oberflächenschicht aufweist.

15. Hydrophobierte Faserzementplatte gemäß Anspruch 13, umfassend einen auf Acryl-Siloxan-Harz basierenden Überzug und wobei sich das Acryl-Siloxan-Harz auch in den Poren der Matrix aus Fasern und Zement von der Platte befindet, eine erste weiße auf Meth(acryl)-Polyurethan-Harz basierende Oberflächenschicht, welche ein weißes Pigment enthält, auf der hydrophoben Überzugsschicht, und eine zweite auf Meth(acryl)-Polyurethan-Harz basierende, farbige Oberflächenschicht, die mindestens ein farbiges Pigment enthält, auf der ersten weißen Oberflächenschicht, wobei die zweite farbige Oberflächenschicht bevorzugt eine größere Härte gegenüber der ersten weißen Oberflächenschicht aufweist.

## Revendications

1. Procédé d'hydrophobisation d'une dalle de fibre de ciment comprenant les étapes consistant à :
- fournir une dalle de fibre de ciment,
- appliquer une composition à base de résine acrylique-siloxane sur ladite dalle de fibre de ciment ;
- sécher ladite composition à base de résine acrylique-siloxane, de manière à former un revêtement hydrophobe sur ladite dalle de fibre de ciment,
- appliquer une première composition à base de résine de polyuréthanne (méth)acrylique sur ledit revêtement hydrophobe de la dalle de fibre de ciment,
- sécher ladite première composition en obtenant une première couche de finition sur ladite couche de revêtement hydrophobe de la dalle de fibre de ciment.

2. Procédé selon la revendication 1, dans lequel ladite composition à base de résine acrylique-siloxane est appliquée sur la dalle de fibre de ciment, de préférence par arrosage, selon une quantité allant de 80 g/m² à 100 g/m².

3. Procédé selon la revendication 1 ou 2, dans lequel le séchage de ladite composition à base de résine acrylique-siloxane est effectué dans un four, à une température comprise entre 40 °C et 60 °C pendant un temps allant de préférence de 30 secondes à 90 secondes.

4. Procédé selon l'une quelconque des revendications précédentes, dans lequel, après l'étape d'application et avant l'étape de séchage, ladite résine acrylique-siloxane est autorisée à pénétrer dans la matrice poreuse de ladite dalle de fibre de ciment pendant un temps allant de préférence de 30 secondes à 90 secondes.

5. Procédé selon l'une quelconque des revendications précédentes, dans lequel ladite première composition à base de résine de polyuréthanne (méth)acrylique appliquée sur ladite couche de revêtement hydrophobe de la dalle de fibre de ciment est transparente, étant obtenue, après séchage de ladite première composition, une première couche de finition transparente sur ladite couche de revêtement hydrophobe de la dalle de fibre de ciment.

6. Procédé selon la revendication 5, comprenant en outre les étapes consistant à :
- appliquer une seconde composition transparente à base de résine de polyuréthanne (méth)acrylique sur ladite première couche de finition transparente, ladite seconde composition à base de résine de polyuréthanne (méth)acrylique ayant, après séchage, des propriétés de dureté supérieures à celles de ladite première composition à base de résine de polyuréthanne (méth)acrylique,
- sécher ladite seconde composition transparente, étant ainsi obtenue une seconde couche de finition transparente sur ladite première couche de finition transparente et plus dure que cette dernière.

7. Procédé selon la revendication 5 ou 6, dans lequel ladite première composition et/ou ladite seconde composition à base de résine de polyuréthanne (méth)acrylique transparente est appliquée, de préférence par pulvérisation, selon une quantité allant de 40 g/m² à 100 g/m², de préférence de 50 g/m² à 70 g/m².

8. Procédé selon la revendication 5, 6 ou 7, dans lequel le séchage de ladite première composition et/ou de ladite seconde composition à base de résine de polyuréthanne (méth)acrylique transparente est effectué dans un four, à une température comprise entre 40 °C et 60 °C pendant une période de temps allant de préférence de 30 secondes à 90 secondes.

9. Procédé selon l'une quelconque des revendications précédentes 1 à 4, dans lequel ladite première composition à base de résine de polyuréthanne (méth)acrylique appliquée sur ladite couche de revêtement hydrophobe de la dalle de fibre de ciment contient un pigment blanc en obtenant, après séchage de ladite première composition, une première couche de finition blanche (apprêt) sur ladite couche de revêtement hydrophobe de la dalle de fibre de ciment, le procédé comprenant en outre les étapes consistant à :
- appliquer une seconde composition à base de résine de polyuréthanne (méth)acrylique contenant au moins un pigment coloré sur ladite première couche de finition blanche, ladite seconde composition à base de résine de polyuréthanne (méth)acrylique ayant de préférence, après séchage, des propriétés de dureté supérieures à celles de ladite première composition à base de résine de polyuréthanne (méth)acrylique,
- sécher ladite seconde composition, étant ainsi obtenue une seconde couche de finition colorée sur ladite première couche de finition blanche de la dalle de fibre de ciment.

10. Procédé selon la revendication 9, dans lequel ladite première composition et/ou ladite seconde composition à base de résine de polyuréthanne (méth)acrylique est appliquée, de préférence par pulvérisation, selon une quantité allant de 40 g/m² à 100 g/m², de préférence de 50 g/m² à 70 g/m².

11. Procédé selon la revendication 9 ou 10, dans lequel le séchage de ladite première composition et/ou de ladite seconde composition à base de résine de polyuréthanne (méth)acrylique est effectué dans un four, à une température comprise entre 40 °C et 60 °C pendant un temps allant de préférence de 30 secondes à 90 secondes.

12. Dalle de fibre de ciment traitée par hydrophobisation, pouvant être obtenue par le procédé selon l'une quelconque des revendications précédentes.

13. Dalle de fibre de ciment traitée par hydrophobisation selon la revendication 12, comprenant un revêtement hydrophobe à base de résine acrylique-siloxane et dans laquelle ladite résine acrylique-siloxane se trouve également dans les pores de la matrice de fibres et de ciment de la dalle, et une première couche de finition à base de résine de polyuréthanne (méth)acrylique sur ladite couche de revêtement hydrophobe.

14. Dalle de fibre de ciment traitée par hydrophobisation selon la revendication 13, comprenant une première couche de finition transparente à base de résine de polyuréthanne (méth)acrylique sur ledit revêtement hydrophobe et, facultativement, une seconde couche de finition transparente à base de résine de polyuréthanne (méth)acrylique sur ladite première couche de finition, ladite seconde couche de finition transparente ayant une dureté supérieure à celle de la première couche de finition transparente.

15. Dalle de fibre de ciment traitée par hydrophobisation selon la revendication 13, comprenant un revêtement hydrophobe à base de résine acrylique-siloxane et dans laquelle ladite résine acrylique-siloxane se trouve également dans les pores de la matrice de fibres et de ciment de la dalle, une première couche de finition blanche à base de résine de polyuréthanne (méth)acrylique contenant un pigment blanc sur ledit revêtement hydrophobe, et une seconde couche de finition colorée à base de résine de polyuréthanne (méth)acrylique contenant au moins un pigment coloré sur ladite première couche de finition blanche, ladite seconde couche de finition colorée ayant de préférence une dureté supérieure par rapport à la première couche de finition blanche.
